**Europäisches Patentamt**

**European Patent Office**

**Office européen des brevets**

(19)

(11) Numéro de publication: **0 074 285**
**B1**

(12)

# FASCICULE DE BREVET EUROPEEN

(45) Date de publication du fascicule du brevet: **29.01.86**

(51) Int. Cl.⁴: **F 01 N 7/18**

(21) Numéro de dépôt: **82401022.7**

(22) Date de dépôt: **04.06.82**

(54) **Joint tournant pour tuyau d'échappement de véhicule automobile.**

(30) Priorité: **29.07.81 FR 8114729**

(43) Date de publication de la demande:
**16.03.83 Bulletin 83/11**

(45) Mention de la délivrance du brevet:
**29.01.86 Bulletin 86/05**

(84) Etats contractants désignés:
**DE GB IT**

(56) Documents cités:
**DE-A-2 716 894**
**GB-A- 884 539**
**US-A-2 688 501**
**US-A-3 177 649**
**US-A-4 097 071**

(73) Titulaire: **AUTOMOBILES PEUGEOT**
**75, avenue de la Grande Armée**
**F-75116 Paris (FR)**
(73) Titulaire: **AUTOMOBILES CITROEN**
**62 Boulevard Victor-Hugo**
**F-92200 Neuilly-sur-Seine (FR)**

(72) Inventeur: **Sigwald, Jacques**
**1 Avenue du Maréchal Leclerc**
**F-95740 Frepillon (FR)**
Inventeur: **Lesueur, Claude**
**46 Rue René Briand**
**F-95100 Argenteuil (FR)**

(74) Mandataire: **Moncheny, Michel et al**
**c/o Cabinet Lavoix 2 Place d'Estienne d'Orves**
**F-75441 Paris Cedex 09 (FR)**

Courier Press, Leamington Spa, England.

EP 0 074 285 B1

## Description

L'invention se rapporte aux joints tournants destinés à assurer le raccordement entre deux éléments d'un tuyau d'échappement sur un véhicule automobile.

Sur un véhicule automobile à moteur à explosions placé à l'avant, le tuyau ou ligne d'échappement, qui parcourt presque toute la longueur du véhicule, contribue pour une bonne part, du fait des vibrations auxquelles il est soumis, à créer une certaine sensation d'inconfort pour les passagers, principalement lorsque le moteur tourne au ralenti. D'autre part, les changements brutaux de couple moteur provoquent des débattements angulaires du moteur qui se répercutent sur la ligne d'échappement. Ces vibrations et ces débattements angulaires créent des contraintes de fatigue importantes sur la ligne d'échappement, pouvant même entraîner sa rupture.

Ces inconvénients, qui sont particulièrement marqués lorsque le moteur est disposé transversalement, sont aggravés par l'adoption de suspensions très souples, autorisant un certain débattement angulaire du moteur, alors que la ligne d'échappement, de grande longueur, ne peut admettre des débattements angulaires aussi importants.

Dans le but de réduire les vibrations de la ligne d'échappement, il est courant d'y intercaler un joint autorisant un débattement angulaire entre un tronçon amont solidaire du moteur et le tronçon principal situé en aval. Dans la technique habituelle, ce joint est un joint à rotule, et l'on a constaté que ce type de joint présente à l'usage l'inconvénient suivant: il comporte toujours au moins une partie de surface frottante qui n'est pas constamment en contact avec la surface conjuguée et qui est en contact avec l'air atmosphérique ou les gaz d'échappement, si bien qu'un arrêt prolongé provoque une oxydation de cette partie de surface, entrainant un défaut de fonctionnement de la rotule lors de la remise en service.

L'invention se propose de remédier à cet inconvénient grâce à l'emploi d'un joint dans lequel les surfaces frottantes restent toujours en contact sur toute leur étendue.

L'invention a pour objet à cet éffet, un joint tournant reliant deux éléments d'un tuyau d'échappement de moteur à explosions de véhicule automobile, caractérisé en ce qu'il comprend deux surfaces frottantes planes en regard formant deux couronnes coaxiales solidaires chacune de l'un des deux éléments de tuyau, le plan de ces surfaces étant perpendiculaires à l'axe d'oscillation du moteur sur sa suspension, et des moyens pour solliciter ces deux surfaces l'une vers l'autre.

Dans un mode de réalisation simple et fiable, une bague à faible coefficient de frottement et résistant à la chaleur est interposée entre les deux surfaces planes, et chaque surface plane appartient à une bride soudée sur l'élément correspondant du tuyau d'échappement.

Les moyens de sollicitation des deux surfaces planes peuvent notamment comprendre un étrier dont les branches s'accrochent derrière une surface plane et dont l'âme s'appuie sur l'élément de tuyau d'échappement solidaire de l'autre surface plane.

Un exemple de réalisation fait l'objet de la description qui suit, en référence au dessin joint, dans lequel:

— la Fig. 1 est une vue schématique en plan d'un moteur et d'une partie de sa ligne d'échappement, laquelle est équipée d'un joint conforme à l'invention;
— la Fig. 2 est un vue en coupe du joint, à plus grande échelle, prise selon la ligne 2—2 de la Fig. 1;
— la Fig. 3 est une vue en coupe du joint, prise selon la ligne 3—3 de la fig. 2.

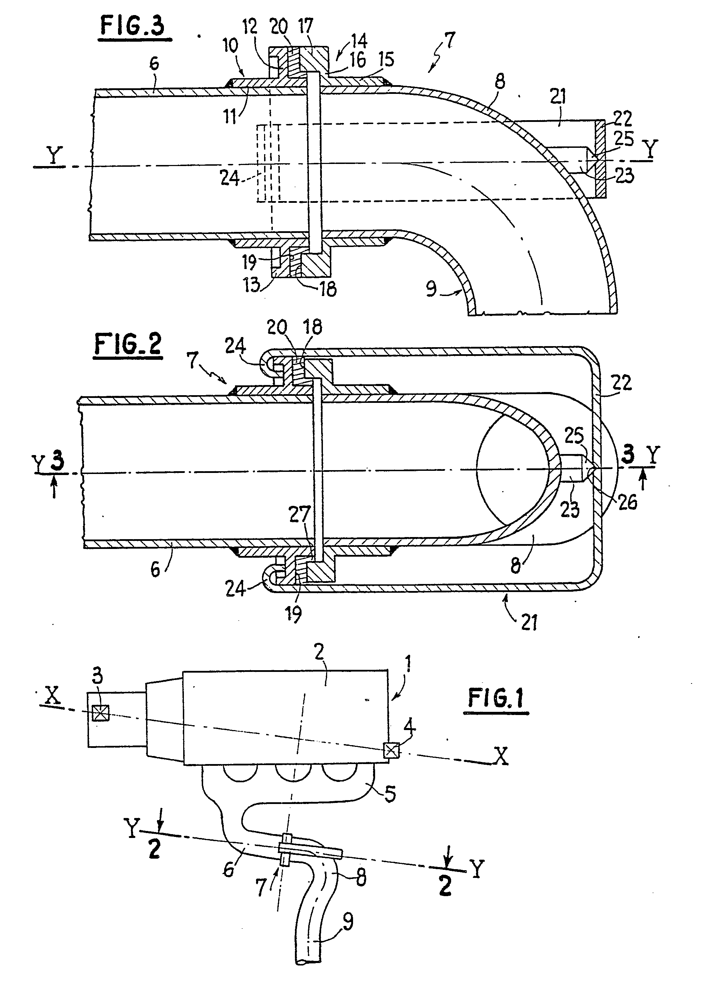

On a représenté sur la Fig. 1 un groupe moto-propulseur 1 disposé transversalement à l'avant d'un véhicule automobile et composé d'un moteur à explosions 2 associé à une boîte de vitesses et à un différentiel. Ce groupe moto-propulseur est suspendu sur la structure du véhicule par deux supports élastique 3 et 4 qui définissent un axe X—X autour duquel le groupe 1 peut osciller.

Les gaz d'échappement du moteur sont évacués par un collecteur 5 solidaire d'un premier élément ou tronçon coudé 6 de tuyau d'échappement. Ce premier tronçon est relié par un joint tournant 7 à une partie coudée 8 d'un second élément ou tronçon 9 du tuyau d'échappement, lequel tuyau se prolonge jusque vers l'arrière de véhicule. Le premier tronçon 6 et la partie coudée 8 du second tronçon ont, dans la région du joint 7, un axe commun Y—Y parallèle à l'axe X—X d'oscillation du groupe 1.

Le joint 7 reliant les deux tronçons est représenté plus en étail sur les Fig. 2 et 3:

Sur l'extrémité aval du premier tronçon 6 est soudée une bride 10 comportant un manchon 11 enfilé sur le tronçon 6 et soudé à celui-ci par son extrémité amont, les tranches d'extrémité aval de ces deux pièces étant sensiblement contenues dans le même plan. En un point intermédiaire, le manchon 11, porte une collerette radiale 12 qui se termine par un rebord annulaire 13 orienté vers l'amont.

De même, l'extrémité amont du tronçon 9 porte une bride 14 qui comprend un manchon 15 enfilé sur ce tronçon et soudé à celui-ci par son extrémité aval. Sur l'extrémité amont du manchon 15, qui affleure celle du tronçon 9, fait saillie une collerette radiale 16 qui porte un épais rebord périphérique 17 en saillie vers l'amont.

Dans la position de service, le rebord 17 est emboîté avec jeu radial sur la partie aval du manchon 11, et sa face amont 18 se trouve à une petite distance vers l'aval de la face aval 19 de la collerette 12, ces deux faces 18 et 19 étant planes et perpendiculaires à l'axe Y—Y.

Il subsiste ainsi entre les brides 10 et 14 un espace annulaire à demi-section en L qui est comblé par une bague 20 de même forme réalisée en un matériau résistant bien à la chaleur et ayant un faible coefficient de frottement, par exemple un métal fritté contenant du graphite.

Un étrier élastique 21 prend appui par le milieu de son âme 22 sur un téton ou pointeau 23 fixé sur la partie coudée 8 du second tronçon 9 et présente à l'extrémité de ses branches des crochets 24 qui s'accrochent derière le rebord 13 de la bride 10 du premier tronçon de manière à maintenir les surfaces 18 et 19 serrées sur la bague 20. Le téton 23 est centré sur l'axe Y—Y et se termine par une pointe 25 qui s'engage dans une empreinte 26 de l'âme de l'étrier, ce qui permet à ce dernier d'osciller librement autour de l'axe Y—Y.

Le joint 7 qui vient d'être décrit permet un débattement angulaire autour de l'axe Y—Y entre le premier tronçon 6 et la partie coudée 8 du second tronçon lorsque le moteur oscille autour de l'axe X—X. Au cours de ce mouvement, les surfaces frottantes restent constamment en contact l'une sur l'autre et aucune portion de ces surfaces ne peut se trouver en contact avec l'atmosphère ou les gaz d'échappement, ce qui élimine les inconvénients recontrés avec les joints à rotule. La partie axiale 27 de la bague 20 assure avec peu de frottements le centrage relatif des deux brides 10 et 14 et donc des éléments de tuyau 6 et 9.

Il va de soi que les dispositions ci-dessus restent applicables si, les supports élastiques 3 et 4 étant situés à des niveaux différents, l'axe X—X n'est pas horizontal. De plus, en variante, la bague 20 pourrait être remplacée par un traitement approprié de l'une ou/et l'autre des surfaces 18 et 19 et éventuellement des surfaces cylindriques de centrage des deux brides.

**Revendications**

1. Joint tournant reliant deux éléments (6, 9) d'un tuyau d'échappement de moteur à explosions (2) de véhicule automobile, caractérisé en ce qu'il comprend deux surfaces frottantes planes en regard (18, 19) formant deux couronnes coaxiales solidaires chacune de l'un des deux éléments de tuyau, le plan de ces surfaces étant perpendiculaire à l'axe (X—X) d'oscillation du moteur sur sa suspension (3, 4), et des moyens (21) pour solliciter ces deux surfaces l'une vers l'autre.

2. Joint tournant suivant la revendication 1, caractérisé en ce qu'une bague (20) à faible coefficient de frottement et résistant à la chaleur est interposée entre les deux surfaces planes (18, 19).

3. Joint tournant suivant l'une des revendications 1 et 2, caractérisé en ce que chaque surface plane (18, 19) appartient à une bride (10, 14) soudée sur l'élément correspondant (6, 9) du tuyau d'échappement.

4. Joint tournant suivant l'une quelconque des revendications 1 à 3, caractérisé en ce qu'il comprend des moyens (11, 17, 27) de centrage relatif des deux surfaces planes (18, 19).

5. Joint tournant suivant les revendications 2 et 4 prises ensemble, caractérisé en ce que la bague (20) présente un collet (27) interposé entre deux surfaces cylindriques adjacentes aux deux surfaces planes (18, 19) et qui en sont respectivement solidaires.

6. Joint tournant suivant la revendication 1, caractérisé en ce que les moyens de sollicitation comprennent un étrier (21) dont les branches s'accrochent derrière une surface plane (19) et dont l'âme (22) s'appuie sur l'élément (9) du tuyau d'échappement solidaire de l'autre surface plane (18).

7. Joint tournant suivant la revendication 6, caractérisé en ce que l'âme (22) de l'étrier (21) s'appuie, par un évidement (26) prévu en son milieu, sur un pointeau (23) solidaire de l'élément correspondant (9) du tuyau d'échappement.

**Patentansprüche**

1. Drehgelenk zur Verbindung zweier Elemente (6, 9) des Auspuffsrohrs des Verbrennungsmotors (2) eines Kraftfahrzeugs, dadurch gekennzeichnet, daß dieses zwei einander gegenüberliegende plane Anlageflächen (18, 19) aufweist, welche zwei koaxiale Ringe bilden, die jeweils fest mit einem der beiden Rohrelemente verbunden sind, wobei die Ebene dieser beiden Flächen senkrecht zur Scheingungsachse (X—X) des Motors auf dessen Aufhängung (3, 5) verläuft, sowie Einrichtungen (21), um die beiden Flächen gegeneinander zu drücken.

2. Drehgelenk nach Anspruch 1, dadurch gekennzeichnet, daß zwischen den beiden planen Flächen (18, 19) ein wärmebeständiger Ring (20) mit geringem Reibungskoeffizienten angeordnet ist.

3. Drehgelenk nach einem der Ansprüche 1 und 2, dadurch gekennzeichnet, daß jede plane Fläche (18, 19) einem Flansch (10, 14) zugeordnet ist, welcher mit dem entsprechenden Element (6, 9) des Auspuffsrohrs verschweißt ist.

4. Drehgelenk nach den Ansprüchen 1 bis 3, dadurch gekennzeichnet, daß dieses Einrichtungen (11, 17, 27) für die Zentrierung gegenüber den beiden planen Flächen (18, 19) aufweist.

5. Drehgelenk nach den Ansprüchen 2 und 4, dadurch gekennzeichnet, daß der Ring (20) einen Bund· (27) zwischen zwei nebeneinanderliegenden zylindrischen Flächen aufweist, die den beiden planen Flächen (18, 19) benachbart und mit diesen jeweils verbunden sind.

6. Drehgelenk nach Anspruch 1, dadurch gekennzeichnet, daß die Einrichtungen zum Gegeneinanderdrücken einen Bügel (21) umfassen, dessen Arme hinter der planen Fläche (19) einhaken und dessen Steg (22) sich an das Element (9) des Auspuffsrohrs anlegt, das mit der anderen planen Fläche (18) verbunden ist.

7. Drehgelenk nach Anspruch 6, dadurch gekennzeichnet, daß der Steg (22) des Bügels (21) sich mit einer Ausnehmung (26) in seiner Mitte an einem spitz zulaufenden Element (23) abstützt, welches mit dem entsprechenden Element (9) des Auspuffsrohrs verbunden ist.

## Claims

1. A rotating joint interconnecting two elements (6, 9) of an exhaust pipe of an internal combustion engine (2) of a motor vehicle, characterised in that it comprises two confronting planar rubbing surfaces (18, 19) forming two coaxial rings each connected to one of the two pipe elements, the plane of these surfaces being perpendicular to the axis (X—X) of oscillation of the motor on its suspension (3, 4), and means (21) for biasing these two surfaces toward each other.

2. A rotating joint according to claim 1, characterised in that a ring (20) having a low coefficient of friction and resisting heat is interposed between the two planar surfaces (18, 19).

3. A rotating joint according to one of the claims 1 and 2, characterised in that each planar surface (18, 19) pertains to a flange (10, 14) welded to the corresponding element (6, 9) of the exhaust pipe.

4. A rotating joint according to any one of the claims 1 to 3, characterised in that it comprises means (11, 17, 27) for achieving a relative centering of the two planar surfaces (18, 19).

5. A rotating joint according to claims 2 and 4 taken together, characterised in that the ring (20) has a flange (27) interposed between two cylindrical surfaces adjacent to the two planar surfaces (18, 19) and which are respectively connected thereto.

6. A rotating joint according to claim 1, characterised in that the biasing means comprise a U-member (21) whose branches are hooked behind a planar surface (19) and whose web (22) bears against the element (9) of the exhaust pipe connected to the other planar surface (18).

7. A rotating joint according to claim 6, characterised in that a web (22) of the U-member (21) bears by a cavity (26) provided in the middle thereof against a pointed member connected to the corresponding element (9) of the exhaust pipe.

0 074 285

FIG.3

FIG.2

FIG.1